# EUROPEAN PATENT APPLICATION

(11) **EP 1 277 407 A2**
(43) Date of publication of application: **22.01.2003**
(21) Application number: 02015434.0
(22) Date of filing: 11.07.2002
(51) Int. Cl.: A23B 7/04, A23L 1/216

(54) **Preparation and preservation method for potatoes fit to be fried**

(30) Priority: 17.07.2001 IT BO20010453
(71) Applicant: Pizzoli S.P.A., 40054 Budrio (Bologna) (IT)
(72) Inventor: Bottardi, Stefano, Dr., 40062 Molinella (Bologna) (IT)
(74) Representative: Negrini, Elena

(57) **Abstract**

A preparation and preservation method for potatoes fit to be fried, including the vapor peeling (1) of the potatoes, the cut (5) of these latter in sticks, includes:
- a preparation cooking in water (7) of the sticks at a temperature ranging between 68C° and 86C° for a time ranging between 31 and 34 minutes;
- a stick drying (8) with an air flow at almost constant temperature ranging between 70C° and 100C° for a time included between 10 and 12 minutes;
- a deep-freezing (11) of the sticks.

The preparation cooking (7) is fit for stopping enzymatic oxidant processes, for the starch gelation and the removal of reducing sugars of the potato; the drying (8) and the deep-freezing (11) are fit respectively for increasing the dry substance percentage and for the preservation.

## Description

The present invention relates to food preservation methods, particularly the invention refers to a preparation and preservation method for potatoes providing frozen potato sticks, fit to be fried.

The known methods for the preparation and preservation of potato sticks fit to be fried for private use or catering, include a pre-frying phase necessary for giving a gilded aspect and a crisp consistence to the product ready for the consumption, besides reducing final frying time.

The main drawback of the known methods consists in that the pre-frying phase requires the use of industrial frying oils or fat, heated to high temperature values so generating inside said potatoes residual products potentially dangerous for the consumer health.

Other drawback consists in that the oily residues on the potatoes produced by means of the known methods can endanger the organoleptic characteristic of the final product.

Further drawback of the known methods consists in that they require complex and expensive industrial deep fryers, having powerful suction and evacuation means of the vapors and fumes and in that they consume high amount of energy and oils and/or fats so that their purchase and maintenance are very expensive.

The main object of the present invention is to propose a preparation and preservation method for potato which allows producing a product without oily residues, treated at medium - low temperatures and therefore healthy and digestible, requiring cooking times of around seven minutes, having excellent organoleptic qualities, being crisp and having the aesthetical characteristics for the consumer's satisfaction.

Further object of the present invention is to propose a method possible with simple devices with low power consumption, thus economic and reliable.

Other object is to propose a method that does not require the evacuation of vapors and fumes of oily substances.

The above-mentioned objects are achieved according to the content of the claims.

The characteristics of the invention are underlined in the following with particular reference to the attached drawing in which a scheme of a phase sequence of the method object of the present invention is shown.

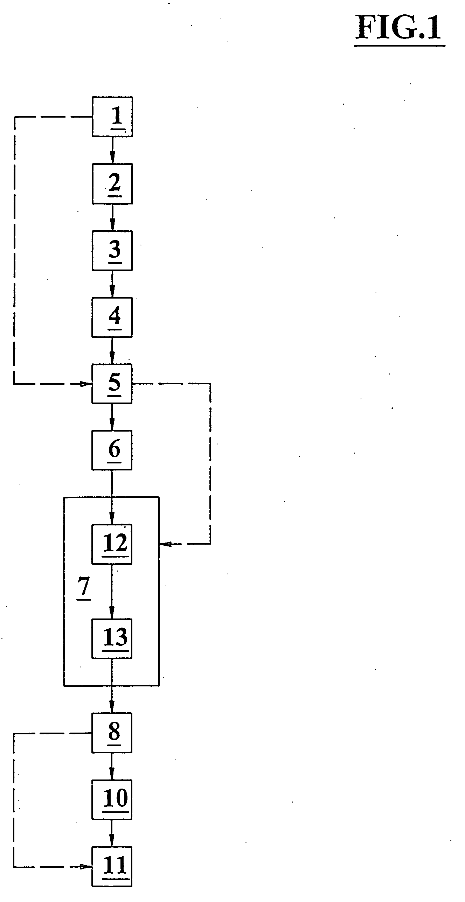

With reference to figure 1, numeral 100 indicates the preparation and preservation method for potato fit to be fried, including the vapor peeling 1 of the potato, the cut 5 of the potato in sticks or similar, a preparation cooking 7 in water of the sticks, a drying 8 in an air flow and a deep-freezing 11 of the sticks which, arrived at the end of the method, are ready for packaging, preservation, sale and final frying for the consumption.

The preparation cooking 7 of the sticks is made at a temperature ranging between 68C° and 86C° for a time included between 31 and 34 minutes and the drying 8 of the sticks is made at an almost constant temperature ranging between 70C° and 100C° for a time included between 10 and 12 minutes.

Particularly the preparation cooking 7 includes a first cooking 12 and a second cooking 13.

The first cooking 12 of the sticks provides an almost constant temperature ranging between 84°C and 86°C for a time ranging between 3 and 4 minutes; the second cooking 13 of the sticks provides an almost constant temperature ranging between 68°C and 70°C for a time ranging between 28 and 30 minutes.

Furthermore the method 100 provides that some parameters of the sticks drying 8 may change according to the percentage of dry substance of the raw material, that is the potato, or according the starch percentage, which is correlated to the dry substance percentage by almost fixed ratios.

Particularly, the drying 8 has a duration included between 10 minutes and 30 seconds and 12 minutes and 30 seconds and it is carried out at an almost constant temperature, in correspondence of potatoes having dry substance percentage equal to approximately 18,5; 19; 20; 21; 22; 23; respectively equal to about 95°C; 90°C; 80°C; 75°C; 72°C; 70°C with a tolerance of approximately two degrees.

The above indicated time and thermal intervals, necessary to include the treatments which provide the variations of the product characteristics required by the market, are centered approximately on the respective preferred duration and temperature values.

The first cooking 12 prevents the enzymatic oxidant processes, responsible of the superficial darkening of the cut raw potatoes and the second cooking 13 is mainly fit for the starch gelation, for giving compactness to the product and shortening the final frying times containing these latter within around 7 minutes.

The second cooking 13 also provides to eliminate or decrease the reducing sugars of the potato, which can produce the Maillard reaction during the final frying, causing an excessive darkening of the sticks.

The drying 8, carrying out a partial dehydration of the sticks, increases the percentage of dry substance of said sticks to give to the fried product, ready to be consummated, a crisp consistence at least equal to the consistence of the products produced by known pre-frying methods.

The deep-freeing 11 is fit for the unchanged preservation of the sticks up to the final frying.

The procedure 100 includes furthermore the brushing 2, the washing 3, the selection 4 of the peeled potato and the calibration and the selection 6 of the sticks.

These latter have parallelepiped shape and are calibrated 6 to have the area of the middle transversal section of around 80 mm². It is also provided that the sticks can have other shapes, for instance a cube, a wedge or a disk.

The method 100 also includes a pre-cooling 10 of the sticks before the deep-freezing 11 of said sticks and it provides that the cooking 7 and the drying 8 are carried out at a pressure included between 0,9 Atm and 1,1 Atm.

The main advantage of the present invention is to provide a preparation and preservation method for potato, which produce a healthy crisp product having excellent organoleptic and aesthetics qualities, which is cheap and reliable and does not require the evacuation and the disposal of substances or their fumes.

## Claims

1. Preparation and preservation method for potatoes fit to be fried including the vapor peeling (1) of the potatoes, the cut (5) of these latter in sticks, said method being **characterized in that** includes:
- a preparation cooking in water (7) of the sticks at a temperature ranging between 68C° and 86C° for a time ranging between 31 and 34 minutes;
- a stick drying (8) with air flow at almost constant temperature ranging between 70C° and 100C° for a time included between 10 and 12 minutes;
- a deep-freezing (11) of the sticks;
the preparation cooking (7) being fit for stopping enzymatic oxidant processes, for the starch gelation and the removal of reducing sugars of the potato; the drying (8) and the deep-freezing (11) being fit respectively for increasing the dry substance percentage and for the preservation.

2. Method according to claim 1 **characterized in that** the preparation cooking (7) of the sticks includes at least a first cooking (12) of the sticks at a temperature almost constant ranging between 84°C and 86°C for a time ranging between 3 and 4 minutes and a second cooking (13) of the sticks at a temperature almost constant ranging between 68°C and 70°C for a time ranging between 28 and 30 minutes.

3. Method according to claim 1 or claim 2 **characterized in that** the drying (8) with airflow has a duration ranging between 10 minutes and 30 seconds and 12 minutes and 30 seconds and is carried out at an almost constant temperature, in correspondence of potatoes with dry substance percentage equal to approximately 18,5; 19; 20; 21; 22; 23; respectively equal to about 95°C; 90°C; 80°C; 75°C; 72°C; 70°C with a tolerance of about one degree.

4. Method according to claim 1 **characterized in that** further includes at least one among brushing (2), washing (3) and selection (4) of the peeled potatoes and calibration and selection (6) of the sticks.

5. Method according to claim 4 **characterized in that** the sticks have an approximately parallelepiped shape or other shape and are calibrated (6) in order to have the area of the middle transversal section of about 80 mm².

6. Method according to any of the preceding claims **characterized in that** includes a pre-cooling (10) of the sticks before the deep-freezing (11) of said sticks.

7. Method according to any of the preceding claims **characterized in that** the pressure of cooking (7) and drying (8) is ranging between 0,9 Atm and 1,1 Atm.
